# EUROPEAN PATENT APPLICATION

(11) **EP 1 265 412 A2**
(43) Date of publication of application: **11.12.2002**
(21) Application number: 02253920.9
(22) Date of filing: 06.06.2002
(51) Int. Cl.: H04L 27/26

(54) **Provision of quadrature signals in a multicarrier receiver**

(30) Priority: 07.06.2001 JP 2001172659
(71) Applicant: ALPS ELECTRIC CO., LTD., Ota-ku Tokyo 145 (JP)
(72) Inventor: Ohtaki, Yukio, c/o Alps Electric Co Ltd, Tokyo (JP)
(74) Representative: Kensett, John Hinton

(57) **Abstract**

To provide a digital quadrature signal detecting circuit (1) constituted by a digital signal delay circuit (8) for forming an in-phase (I) signal by delaying a digital signal outputted from an analog/digital conversion part (4) for analog/digital converting a received signal having a non-zero center frequency by a predetermined sampling frequency, and a digital all-pass filter (7) for forming a quadrature (Q) signal by shifting a phase of the digital signal by 90°, wherein the digital all-pass filter is an infinite impulse response digital filter having a definite group delay frequency characteristic, and the digital signal delay circuit has a signal delay amount equal to a group delay amount of the digital all-pass filter.

## Description

### BACKGROUND OF THE INVENTION

### 1. Field of the Invention

The present invention relates to a digital quadrature signal detecting circuit, and particularly to a digital quadrature signal detecting circuit in which from a digital signal outputted from an analog/digital conversion part, a quadrature signal (Q signal) and an in-phase signal (I signal) are formed using a digital all-pass filter and a digital signal delay circuit, a simple circuit structure is formed without using many structural parts, and consumed electric power can be reduced.

### 2. Description of the Related Art

Recently, in the field of broadcasting, instead of conventional ground wave analog broadcasting, ground wave digital broadcasting which has excellent broadcasting quality and can transmit many broadcasting channels has come into the limelight. In countries in Europe and America, regular broadcasting has been already started, and also in Japan, it is expected to be put to practical use before long.

In the ground wave digital broadcasting in Europe or Japan, an orthogonal frequency division multiplex (OFDM) modulation system is used for broadcast signals, and in a broadcast receiver (hereinafter referred to as a ground wave digital broadcast receiver) which can receive the ground wave digital broadcasting, an orthogonal detector circuit for orthogonally detecting the orthogonal frequency division multiplex modulation signal is used.

Incidentally, in the case where the conventional ground wave digital broadcast receiver of this type orthogonally detects the orthogonal frequency division multiplex modulation signal, a pre-processing circuit and an orthogonal frequency division multiplex detector circuit subsequent to that are used.

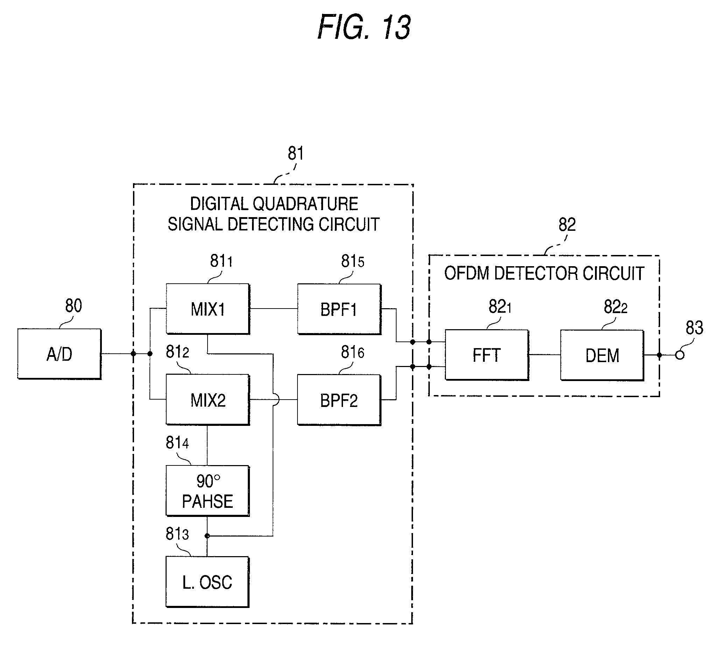

Here, Fig. 13 is a block diagram showing an example of a structure of an orthogonal detector circuit of an orthogonal frequency division multiplex modulation signal used for a known ground wave digital broadcast receiver.

As shown in Fig. 13, this orthogonal detector circuit is constituted by a pre-processing circuit (hereinafter referred to as a digital quadrature signal detecting circuit) 81, and an orthogonal frequency division multiplex detector circuit (OFDM detector circuit) 82, and an analog/digital converter (A/D) 80 is connected to the input side of the digital quadrature signal detecting circuit 81, and the output side of the orthogonal frequency division multiplex detector circuit 82 is connected to a detected signal output terminal 83.

The digital quadrature signal detecting circuit 81 is constituted by a first mixer (MIX1) 81₁, a second mixer (MIX2) 81₂, a local oscillator (L. OSC) 81₃, a 90° phase shifter 81₄, a first band pass filter (BPF1) 81₅, and a second band pass filter (BPF2) 81₆. The orthogonal frequency division multiplex detector circuit 82 is constituted by a fast Fourier transform (FFT) circuit 82₁, and an orthogonal frequency division multiplex demodulation circuit (DEM) 82₂. In this case, the first band pass filter 81₅ and the second band pass filter 81₆ are digital filters, and use finite impulse response (FIR) digital filters of definite group delay frequency characteristics. Incidentally, these digital filters 81₅ and 81₆ may be low pass filters instead of the band pass filters.

Then, in the digital quadrature signal detecting circuit 81, the first input of the first mixer 81₁ is connected to the output of the analog/digital converter 80, its second input is connected to the output of the local oscillator 81₃, and its output is connected to the input of the first band pass filter 81₅. The first input of the second mixer 81₂ is connected to the output of the analog/digital converter 80, its second input is connected to the output of the 90° phase shifter 81₄, and its output is connected to the input of the second band pass filter 81₆. The input of the 90° phase shifter 81₄ is connected to the output of the local oscillator 81₃. The output of the first band pass filter 81₅ is connected to the first input of the fast Fourier transform circuit 82₁, and the output of the second band pass filter 81₆ is connected to the second input of the fast Fourier transform circuit 82₁. In the orthogonal frequency division multiplex detector circuit 82, the input of the orthogonal frequency division multiplex demodulation circuit 82₂ is connected to the output of the fast Fourier transform circuit 82₁, and its output is connected to the detected signal output terminal 83.

The orthogonal detector circuit of the above structure operates, in brief, as follows.

Now, when a ground wave digital broadcast is received by the ground wave digital broadcast receiver, the received signal is amplified and frequency converted by a tuner part (not shown), and is supplied, as an intermediate frequency signal, to the analog/digital converter 80. The analog/digital converter 80 converts the supplied intermediate frequency signal into a digital signal, and supplies this digital signal to the digital quadrature signal detecting circuit 81.

In the digital quadrature signal detecting circuit 81, the first mixer 81₁ frequency mixes the digital signal and a local oscillation signal of the local oscillator 81₃ to generate a first frequency mixed signal, and the first band pass filter 81₅ extracts an I signal including a required frequency band from the first frequency mixed signal, and supplies the extracted I signal to the fast Fourier transform circuit 82₁. At the same time as this, the second mixer 81₂ frequency mixes the digital signal and the local oscillation signal of the local oscillator 81₃, the phase of which is shifted by 90° through the 90° phase shifter 81₄, to generate a second frequency mixed signal, and the second band pass filter 81₆ extracts a Q signal having a required frequency band from the second frequency mixed signal, and supplies the extracted Q signal to the fast Fourier transform circuit 82₁.

In the orthogonal frequency division multiplex detector circuit 82, the fast Fourier transform circuit 82₁ uses the supplied I signal and the Q signal to carry out a fast Fourier transform processing, and supplies a Fourier transform processing signal to the orthogonal frequency division multiplex demodulation circuit 82₂. The orthogonal frequency division multiplex demodulation circuit 82₂ carries out a demodulation processing against digital modulation, such as quaternary phase shift keying (QPSK), with respect to the supplied Fourier transform processing signal, and supplies the obtained demodulation signal to the detected signal output terminal 83.

Since the known ground wave digital broadcast receiver uses the two digital filters 81₅ and 81₆ in the digital quadrature signal detecting circuit 81 of the orthogonal detector circuit, particularly uses the large scale finite impulse response digital filters having a large filter order (number of signal processing stages) as the digital filters 81₅ and 81₆, many circuit structural parts become necessary in order to obtain these digital filters 81₅ and 81₆, and the occupied volumes of the digital filters 81₅ and 81₆ become large by that, and the consumed electric power in the digital filters 81₅ and 81₆ is increased.

Besides, since the known ground wave digital broadcast receiver uses the four separate circuits of the first mixer 81₁, the second mixer 81₂, the local oscillator 81₃, and the 90° phase shifter 81₄ for the digital quadrature signal detecting circuit 81 of the orthogonal detector circuit, many circuit structural parts also become necessary in order to obtain these separate circuits 81₁ to 81₄, and the occupied volume of the digital quadrature signal detecting circuit 81 becomes large by this as well, and the consumed electric power in the digital quadrature signal detecting circuit 81 is increased.

### SUMMARY OF THE INVENTION

The invention has been made in view of such technical background, and its object is to provide a digital quadrature signal detecting circuit in which one-system digital filter and one-system digital signal delay circuit are used, so that the circuit structure becomes simple, the occupied volume becomes small, and the consumed electric power can be reduced.

In order to achieve the object, the invention includes a main structure constituted by a digital signal delay circuit for forming an in-phase signal (I signal) by delaying a digital signal outputted from an analog/digital conversion part for analog/digital converting a received signal having a non-zero center frequency by a predetermined sampling frequency, and a digital all-pass filter for forming a quadrature signal (Q signal) by shifting a phase of the digital signal by 90°, wherein the digital all-pass filter is an infinite impulse response digital filter having a definite group delay frequency characteristic, and the digital signal delay circuit has a signal delay amount equal to a group delay amount of the digital all-pass filter.

According to the main structure, the digital quadrature signal detecting circuit is constituted by the one-system digital signal delay circuit for forming the I signal, and the one-system digital all-pass filter for forming the Q signal, and the infinite impulse response digital filter is used as the digital all-pass filter, so that as compared with the known digital quadrature signal detecting circuits of this type, the number of required circuits is greatly decreased, and further, since the infinite impulse response digital filter, the filter order (number of stages of signal processing parts) of which may be small as compared with the finite impulse response digital filter, is used, the digital quadrature signal detecting circuit can be obtained in which the occupied volume is reduced through the simple circuit structure having structural parts, the number of which is reduced, and the consumed electric power can be reduced.

Besides, in order to achieve the object, the invention includes another main structure constituted by a digital signal delay circuit for forming an in-phase signal by delaying one of digital signals obtained by thinning out, with order 2, a digital signal outputted from an analog/digital conversion part for analog/digital converting a received signal having a non-zero center frequency by a predetermined sampling frequency, and a digital all-pass filter for forming a quadrature signal by shifting, by 90°, a phase of the other of the digital signals thinned out with order 2, wherein the digital all-pass filter is an infinite impulse response digital filter having a definite group delay frequency characteristic, and the digital signal delay circuit has a signal delay amount equal to a group delay amount of the digital all-pass filter.

According to the other structure, the operation by the main structure can be expected, and further, since the digital signal to be processed is the digital signal thinned out with order 2, and the operation rates of the digital signal delay circuit and the digital all-pass filter become low, the consumed electric power can be further reduced as compared with the degree of reduction of the consumed electric power expected in the main structure.

In the main structure and the other structure, the infinite impulse response digital filter can be made a first structure in which each of cascaded signal processing parts of n stages, n being an arbitrary integer of three or larger, includes a first delay part, a second delay part, an adder part, a multiplier part, and a multiplier coefficient generation part, and constants of the respective parts are set so that a phase gradient number generated in a signal band with 1/4 of a sampling frequency as the center becomes n-1.

According to the first structure, a phase difference between the Q signal outputted from the one infinite impulse response digital filter and the I signal outputted from the digital signal delay circuit can be made to fall within a slight variation range in a required frequency band, and the digital quadrature signal detecting circuit having an excellent conversion characteristic in addition to the function obtained by the main structure can be obtained.

Further, in the first structure, it is preferable that the cascaded n stage signal processing parts are made to have a second structure in which the signal processing part of an odd-numbered stage from the output side is constituted by only the first delay part and the second delay part.

According to this second structure, the adder part, the multiplier part, and the multiplier coefficient generation part of the signal processing part of the odd-numbered stage from the output side in the cascaded n stage signal processing parts are respectively omitted, and the signal processing part is constituted by only the first delay part and the second delay part, so that the digital quadrature signal detecting circuit can be obtained in which the number of structural parts is reduced by the omission of the adder part, the multiplier part, and the multiplier coefficient generation part to form a simple circuit structure, the occupied volume becomes smaller by that, and the consumed electric power can be further reduced.

Besides, in the first structure, in the case where the output of the infinite impulse response digital filter is outputted by thinning-out with order 2, it is preferable that the cascaded n stage signal processing parts are made to have a third structure in which an operation frequency of the infinite impulse response digital filter is selected to 1/2 of the sampling frequency, and the cascaded n stage signal processing parts are constructed by only the signal processing parts of even-numbered stages from the output side.

According to this third structure, all the signal processing parts of odd-numbered stages from the output side in the cascaded n stage signal processing parts are omitted, and the signal processing parts are constituted by only the signal processing parts of the even-numbered stages from the output side, so that the digital quadrature signal detecting circuit can be obtained in which the number of structural parts is greatly decreased by the omission of the signal processing parts of the odd-numbered stages to form a simpler circuit structure, the occupied volume is greatly decreased by that, and the consumed electric power can be greatly reduce.

An embodiment of the present invention, will now be described, by way of example only, with reference to the accompanying drawings, in which:
Fig. 1 shows a first embodiment of a digital quadrature signal detecting circuit of the invention and is a block diagram showing a main structure of a ground wave digital broadcast receiver including the digital quadrature signal detecting circuit.
Fig. 2 shows a second embodiment of a digital quadrature signal detecting circuit of the invention and is a block diagram showing a main structure of a ground wave digital broadcast receiver including the digital quadrature signal detecting circuit.
Fig. 3 is a circuit diagram showing a first example of a specific structure of an infinite impulse response digital filter 7 used for the digital quadrature signal detecting circuits of Figs. 1 and 2.
Fig. 4 is an explanatory view for explaining a variation state of a phase of an infinite impulse response digital filter.
Fig. 5 is an explanatory view for explaining group delay frequency characteristics of an infinite impulse response digital filter and is an explanatory view showing delay characteristics of a digital signal delay circuit as well.
Fig. 6 is a characteristic view showing a variation state of a phase when a phase gradient number generated in a frequency band in an infinite impulse response digital filter is changed.
Fig. 7 is a characteristic view showing a variation state of a phase difference in a frequency band in an infinite impulse response digital filter shown in Fig. 6.
Fig. 8 is a characteristic view showing a variation state of group delay when a phase gradient number is made a parameter in an infinite impulse response digital filter.
Fig. 9 is a table showing an example of coefficient values set in multiplier coefficient generation parts when a generated phase gradient number and the arrangement stage number of signal processing stages are determined in an infinite impulse response digital filter.
Fig. 10 is a table expressing the relation among the phase gradient, the number of the coefficient, and the coefficient values of the respective coefficients shown in Fig. 9 in a more generalized state.
Fig. 11 is a circuit diagram showing a second example of a specific structure of an infinite impulse response digital filter used for the digital quadrature signal detecting circuits shown in Figs. 1 and 2.
Fig. 12 is a circuit diagram showing a third example of a specific structure of an infinite impulse response digital filter used for the digital quadrature signal detecting circuits shown in Figs. 1 and 2.
Fig. 13 is a block diagram showing an example of a structure of an orthogonal detector circuit of an orthogonal frequency division multiplex demodulation signal used for a known ground wave digital broadcast receiver.

### DESCRIPTION OF THE PREFERRED EMBODIMENTS

Hereinafter, embodiments of the invention will be described with reference to the drawings.

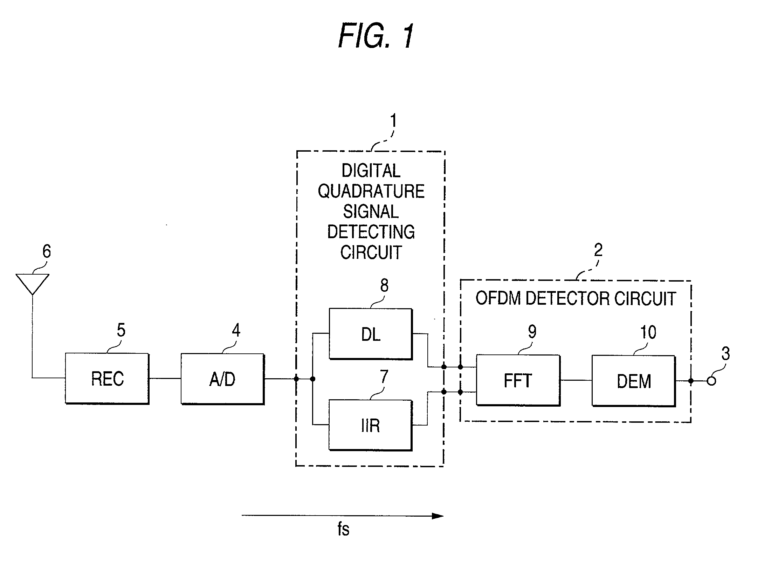

Fig. 1 shows a first embodiment of a digital quadrature signal detecting circuit according to the invention and is a block diagram showing a main structure of a ground wave digital signal broadcast receiver including the digital quadrature signal detecting circuit.

As shown in Fig. 1, the ground wave digital signal broadcast receiver provided with the digital quadrature signal detecting circuit according to the first embodiment is constituted by a digital quadrature signal detecting circuit 1, an orthogonal frequency division multiplex detector circuit (OFDM detector circuit) 2, a detected signal output terminal 3, an analog/digital converter (A/D) 4, a tuner part (REC) 5, and a receiving antenna 6.

In this case, the digital quadrature signal detecting circuit 1 is constituted by an infinite impulse response digital filter (IIR) 7 and a digital signal delay circuit (DL) 8. Besides, the orthogonal frequency division multiplex detector circuit 2 is constituted by a fast Fourier transform circuit (FFT) 9 and an orthogonal frequency division multiplex demodulation circuit (DEM) 10. The infinite impulse response digital filter 7 shifts the phase of an inputted digital signal by 90°, and the digital signal delay circuit 8 gives a signal delay equal to a signal group delay amount of the infinite impulse response digital filter 7 to the inputted digital signal.

The input of the tuner part 5 is connected to the receiving antenna 6, and its output is connected to the input of the analog/digital converter 4. In the digital quadrature signal detecting circuit 1, the input of the infinite impulse response digital filter 7 is directly connected to the output of the analog/digital converter 4, and its output is connected to the first input of the fast Fourier transform circuit 9. The input of the digital signal delay circuit (DL) 8 is directly connected to the output of the analog/digital converter 4, and its output is connected to the second input of the fast Fourier transform circuit 9. In the orthogonal frequency division multiplex detector circuit 2, the input of the orthogonal frequency division multiplex demodulation circuit 10 is connected to the output of the fast Fourier transform circuit 9, and its output is connected to the detected signal output terminal 3.

The ground wave digital signal broadcast receiver according to the above structure operates as follows.

Now, when a ground wave digital broadcast signal is received in the receiving antenna 6, the digital broadcast signal is supplied, as a received signal, to the tuner part 5. After amplifying this received signal, the tuner part 5 frequency mixes the amplified received signal and a local oscillation signal to form a frequency mixed signal, extracts an intermediate frequency (IF) signal from the formed frequency mixed signal, and supplies the obtained intermediate frequency signal to the analog/digital converter 4. The analog/digital converter 4 analog/digital converts the supplied intermediate frequency signal, outputs a digital signal (sampling frequency fs) from the output, and supplies it to the digital quadrature signal detecting circuit 1.

In the digital quadrature signal detecting circuit 1, the infinite impulse response digital filter 7 shifts the phase of the supplied digital signal by 90° to form a Q signal, and supplies the formed Q signal to the orthogonal frequency division multiplex detector circuit 2. The digital signal delay circuit 8 delays the supplied digital signal by a signal delay amount equal to a signal group delay amount given to the digital signal, the phase of which is shifted by the infinite impulse response digital filter 7 by 90°, to form an I signal, and supplies the formed I signal to the orthogonal frequency division multiplex detector circuit 2.

In the orthogonal frequency division multiplex detector circuit 2, the fast Fourier transform circuit 9 uses the supplied I signal and the Q signal to carry out a fast Fourier transform processing, and supplies a Fourier transform processing signal to the orthogonal frequency division multiplex demodulation circuit 10. The orthogonal frequency division multiplex demodulation circuit 10 carries out a demodulation processing against digital modulation, such as quaternary phase shift keying (QPSK), with respect to the supplied Fourier transform processing signal, and supplies the obtained demodulation signal to the detected signal output terminal 3.

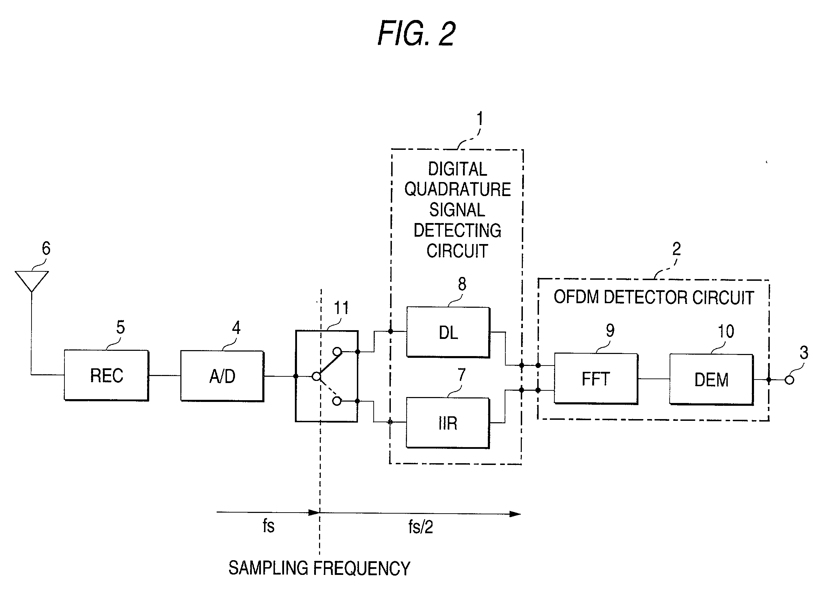

Next, Fig. 2 shows a second embodiment of a digital quadrature signal detecting circuit according to the invention, and is a block diagram showing a main structure of a ground wave digital signal broadcast receiver including the digital quadrature signal detecting circuit similar to the case of Fig. 1.

As shown in Fig. 2, the ground wave digital signal broadcast receiver (hereinafter referred to as the second embodiment) provided with the digital quadrature signal detecting circuit according to the second embodiment has only a structural difference that in the ground wave digital signal broadcast receiver (hereinafter referred to as the first embodiment) provided with the digital quadrature signal detecting circuit according to the first embodiment shown in Fig. 1, a changeover switch 11 with one circuit and two contacts is newly arranged between the analog/digital converter 4 and the digital quadrature signal detecting circuit 1, and except for that, there is no difference in structure between the first embodiment and the second embodiment. Thus, a further description of the structure of the second embodiment is omitted.

Incidentally, in Fig. 2, the same structural elements as the structural elements shown in Fig. 1 are designated by the same symbols.

Here, the operation of the second embodiment will be described.

In the second embodiment, the operation from the reception of a ground wave digital signal broadcast signal by a receiving antenna 6 to the output of a digital signal having a sampling frequency fs by the analog/digital converter 4 is the same as the operation of the foregoing first embodiment, and since the description is duplicate, the description of the operation of this point in the second embodiment is omitted.

Next, the digital signal having the sampling frequency fs outputted from the analog/digital converter 4 is supplied to the changeover switch 11. The changeover switch 11 carries out thinning-out with order 2 to the supplied digital signal by switching of the movable contact, and converts it into two digital signals having a sampling frequency of fs/2. The two converted digital signals are supplied to the infinite impulse response digital filter 7 and the digital signal delay circuit 8 of the digital quadrature signal detecting circuit 1, respectively.

Thereafter, the respective operations of the infinite impulse response digital filter 7 and the digital signal delay circuit 8 in the digital quadrature signal detecting circuit 1 are the same as the respective operations of the infinite impulse response digital filter 7 and the digital signal delay circuit 8 in the first embodiment, and the respective operations of the fast Fourier transform circuit 9 and the orthogonal frequency division multiplex demodulation circuit 10 subsequent to those are the same as the respective operations of the fast Fourier transform circuit 9 and the orthogonal frequency division multiplex demodulation circuit 10 in the first embodiment. Since their description is duplicate, the description of this point in the second embodiment is also omitted.

Although the second embodiment requires the changeover switch 11 in surplus as compared with the first embodiment, the digital signal supplied to the digital quadrature signal detecting circuit 1 becomes the digital signal thinned out with order 2, the operation rates of the infinite impulse response digital filter 7 and the digital signal delay circuit 8 become low, and consumed electric power can be reduced by that.

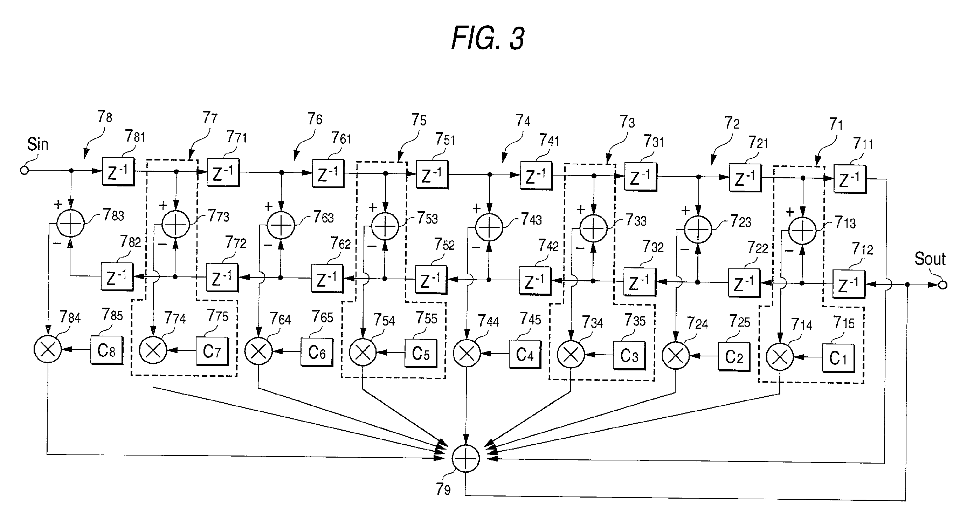

Next, Fig. 3 is a circuit diagram showing a first example of a specific structure of the infinite impulse response digital filter 7 used for the digital quadrature signal detecting circuit 1 shown in Figs. 1 and 2.

As shown in Fig. 3, the infinite impulse response digital filter 7 is provided with a filter input terminal Sin, a filter output terminal Sout, eight signal processing parts 7₁ to 7₈ cascaded from the output side to the input side, and a common adder 79. In this case, the respective signal processing parts 7₁ to 7₈ are constituted by first delay parts 7₁₁ to 7₈₁, second delay parts 7₁₂ to 7₈₂, adder parts 7₁₃ to 7₈₃, multiplier parts 7₁₄ to 7₈₄, and multiplier coefficient generation parts 7₁₅ to 7₈₅, respectively. In the respective signal processing parts 7₁ to 7₈, the first delay parts 7₁₁ to 7₈₁, the second delay parts 7₁₂ to 7₈₂, the adder parts 7₁₃ to 7₈₃, the multiplier parts 7₁₄ to 7₈₄, and the multiplier coefficient generation parts 7₁₅ to 7₈₅ are mutually connected as shown in Fig. 3.

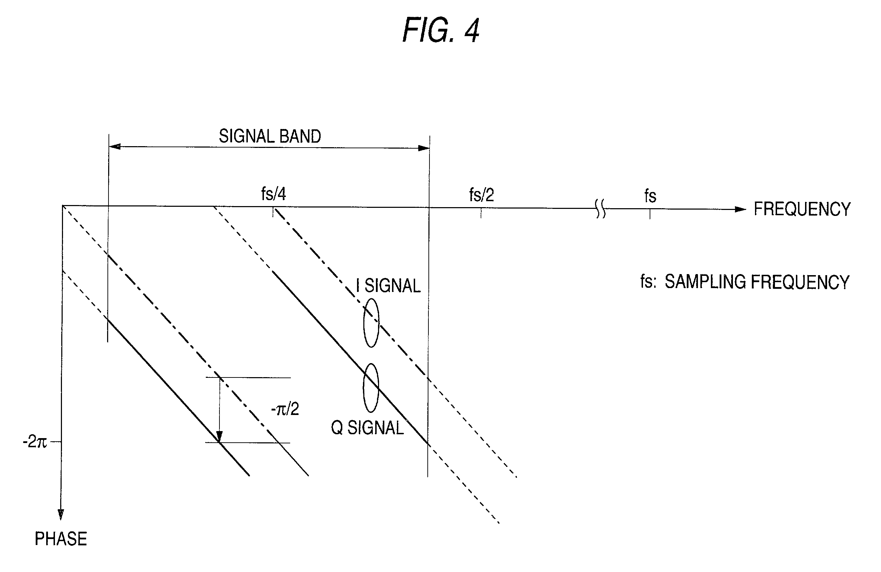

Here, Fig. 4 is an explanatory view for explaining a variation state of an output phase of the infinite impulse response digital filter 7, and also shows a variation state of an output phase of the digital signal delay circuit 8.

In Fig. 4, the vertical axis indicates the phase, the horizontal axis indicates the frequency, a solid line indicates the variation state of the phase of the infinite impulse response digital filter 7, and an alternate long and short dash line indicates the variation state of the phase of the digital signal delay circuit 8.

As shown in Fig. 4, within a signal band (range indicated by dotted lines) with a frequency fs/4 of 1/4 of the sampling frequency fs as the center, the variation state of the phase of the digital signal delay circuit 8 is such that the phase value is linearly changed as the frequency changes from the lower limit frequency value of the signal band toward the upper limit frequency value, and when the phase value reaches -2π, it jumps to a phase value of 0, and the phase value is again linearly changed as the frequency changes toward the upper limit frequency value. On the other hand, the variation state of the phase of the infinite impulse response digital filter 7 is also such that the phase value is linearly changed at the same phase gradient as the digital signal delay circuit 8 as the frequency changes from the lower limit frequency value of the signal band toward the upper limit frequency value, and when the phase value reaches -2π, it jumps to a phase value of 0, and the phase value is again linearly changed as the frequency changes toward the upper frequency value. The phase difference between the phase value of the infinite impulse response digital filter 7 and the phase value of the digital signal delay circuit 8 is always -(π/2) in the signal band, that is, -90°.

In this case, the ratio of the phase variation to the frequency variation is the phase gradient, and is defined by the number of times of occurrence of a phase variation of -2π in a range from a frequency of 0 to fs. For example, when an accumulated phase in the range from the frequency of 0 to fs is -6π, the phase gradient becomes 3.

Incidentally, the phase gradient is also a group delay time from the definition, and is a delay time with a sampling time as a unit. For example, when the phase gradient is 3, the group delay becomes three clocks.

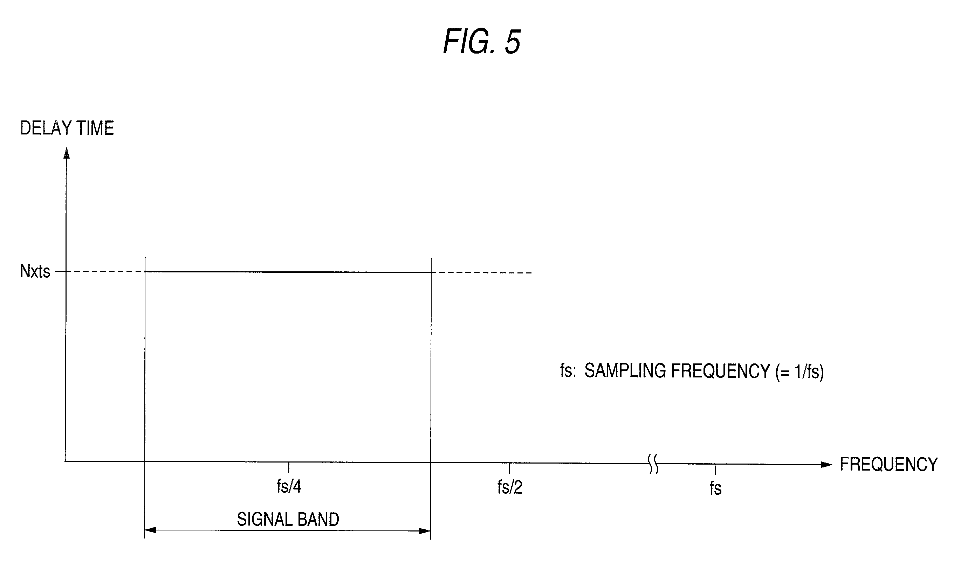

Subsequently, Fig. 5 is an explanatory view for explaining group delay frequency characteristics of the infinite impulse response digital filter 7, and is an explanatory view also showing delay characteristics of the digital signal delay circuit 8.

In Fig. 5, the vertical axis indicates the delay time, the horizontal axis indicates the frequency, and solid lines indicate the group delay frequency characteristics of the infinite impulse response digital filter 7 and the digital signal delay circuit 8.

As shown in Fig. 5, in a signal band (range indicated by dotted lines) with a frequency fs/4 of 1/4 of the sampling frequency fs as the center, the group delay frequency characteristic of the infinite impulse response digital filter 7 and the group delay time of the digital signal delay circuit 8 indicate the same constant value of N x ts (here, N is a phase gradient number, and ts is a sampling time).

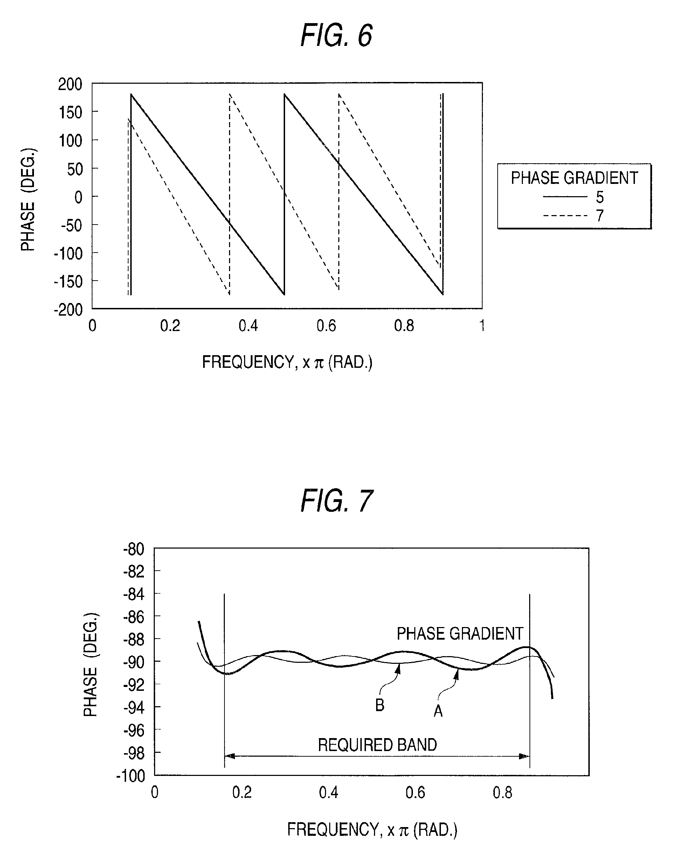

Subsequently, Fig. 6 is a characteristic view showing a phase variation state when a phase gradient number generated in a frequency band in the infinite impulse response digital filter 7 is changed.

In Fig. 6, the vertical axis indicates the phase expressed in degrees, the horizontal axis indicates the frequency expressed in radians (2π radians correspond to a sampling frequency), a solid line indicates the variation state of the phase when the phase gradient number of the infinite impulse response digital filter 7 is made 5, and a dotted line indicates the variation state of the phase when the phase gradient number of the infinite impulse response digital filter 7 is made 7.

As shown in Fig. 6, by suitably selecting the delay constants of the respective first delay parts and the respective second delay parts constituting the infinite impulse response digital filter 7, and the respective coefficients of the respective multiplier coefficient generation parts, the variation state of the phase of the infinite impulse response digital filter 7 becomes linear in the frequency band (0.1 π to 0.9 π radian) of the digital signal, and the variation state becomes such that the phase gradient number becomes 5 or 7 in all frequency band (0 to 2 π radians).

Next, Fig. 7 is a characteristic view showing a variation state of a phase difference between the phase of the infinite impulse response digital filter 7 and the phase of the digital signal delay circuit 8 in the signal band of the infinite impulse response digital filter 7 shown in Fig. 6.

In Fig. 7, the vertical axis indicates the phase difference expressed in degrees, the horizontal axis indicates the frequency expressed in radians, a curve A indicates a variation state of a phase difference when the phase gradient number of the infinite impulse response digital filter 7 is made 5, and a curve B indicates a variation state of a phase difference when the phase gradient number of the infinite impulse response digital filter 7 is made 7.

As shown by the curve A and the curve B in Fig. 7, in the frequency band (0.1 π to 0.9 π radian) of the digital signal, although the infinite impulse response digital filter 7 has five or seven phase difference variation portions, it is understood that the phase difference is in the vicinity of -90°.

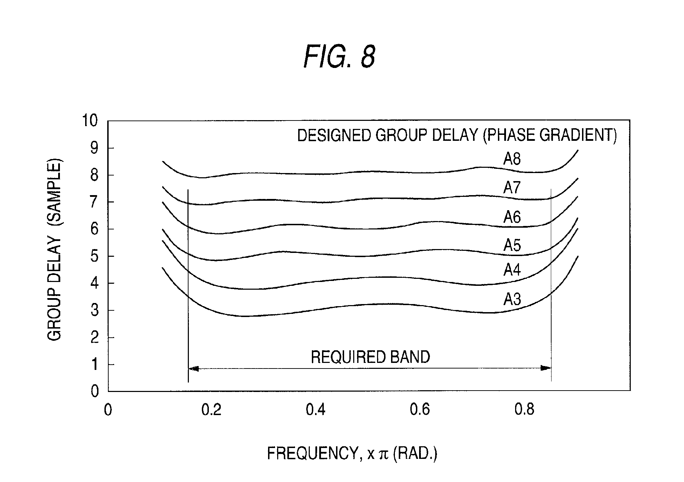

Next, Fig. 8 is a characteristic view showing a variation state of group delay when a phase gradient number is made a parameter in the infinite impulse response digital filter 7.

In Fig. 8, the vertical axis indicates the group delay expressed with a sample number as a reference, the horizontal axis indicates the frequency expressed in radians, and curves A3 to A8 indicate variation states of the group delay when the phase gradient number of the infinite impulse response digital filter 7 is made 3 to 8.

As indicated by the curves A3 to A8 shown in Fig. 8, in the frequency band (0.1 π to 0.9 π radian) of the digital signal, the variation state of the group delay of the infinite impulse response digital filter 7 becomes sequentially small as the phase gradient number is changed from 3 to 8, it is understood that taken altogether, the variation state is in a limited range.

As described above, according to the infinite impulse response digital filter 7 of the first example, when the respective delay constants of the respective first delay parts and the respective second delay parts, and the respective coefficients of the respective multiplier coefficient generation parts are suitably selected so that the phase gradient number of the infinite impulse response digital filter 7 becomes, for example, 3 or more, the phase difference between the Q signal outputted from the infinite impulse response digital filter 7 and the I signal outputted from the digital signal delay circuit in the frequency band of the digital signal can be made approximately 90°, and the group delays of the Q signal and the I signal can be made almost identical to each other. Since the infinite impulse response digital filter 7 is used to obtain the Q signal, as compared with the case of the known circuit of this type, a simple circuit structure is obtained in which the number of structural parts is reduced, and by that, the occupied volume can be made small, and consumed electric power can be reduced.

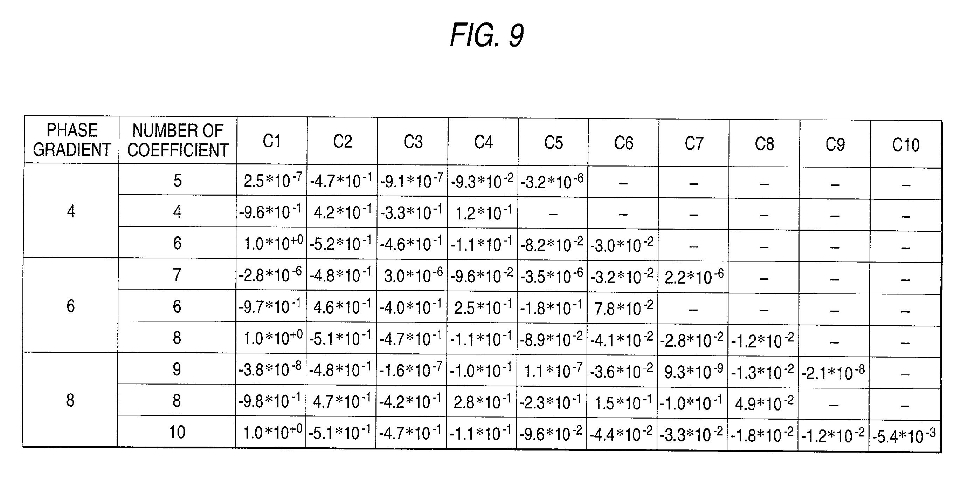

Next, Fig. 9 is a table showing an example of coefficient values set in the multiplier coefficient generation part when the generated phase gradient number and the arrangement stage number of the signal processing parts are determined in the infinite impulse response digital filter 7.

In Fig. 9, the leftmost column indicates the number of the phase gradient (written as phase gradient in the table), the next column indicates the arrangement stage number (written as number of coefficient in the table) of the signal processing parts, and next columns indicate coefficient values set for the multiplier coefficient generation parts (in the table, the coefficients C1, C2, ··· ···, C8 shown in the multiplier coefficient generation parts of Fig. 3 are written, and coefficients of multiplier coefficient generation parts of ninth and tenth signal processing stages, which are not shown in Fig. 3, are written as C9 and C10).

As shown in Fig. 9, in the structural example of the uppermost stage, when the phase gradient is 4, and the number of the coefficient is 5, the coefficient C1 is set to 2.5 × 10⁻⁷; the coefficient C2, -0.4 × 10⁻¹; the coefficient C3, -9.1 × 10⁻⁷; the coefficient C4, -9.3 × 10⁻²; and the coefficient C5, -3.2 × 10⁻⁶. Similarly, also in structural examples of the second stage and the following, in accordance with the phase gradient and the number of the coefficient, the respective coefficients C1 to C10 corresponding to the number of the coefficient are set to values shown in the drawing.

Incidentally, from the coefficient values of the respective coefficients C1 to C10 shown in Fig. 9, when the phase gradient is 4 and the number of the coefficient is 5, when the phase gradient is 6 and the number of the coefficient is 7, and when the phase gradient is 8 and the number of the coefficient 9, the numerical values including the exponents of the coefficient values of the odd-numbered coefficients C1, C3, C5, C7 and C9 are 10⁻⁶, 10⁻⁷, 10⁻⁸, and 10⁻⁹, and when effective figures are five figures, the respective coefficient values including these numerical values indicate substantially zero.

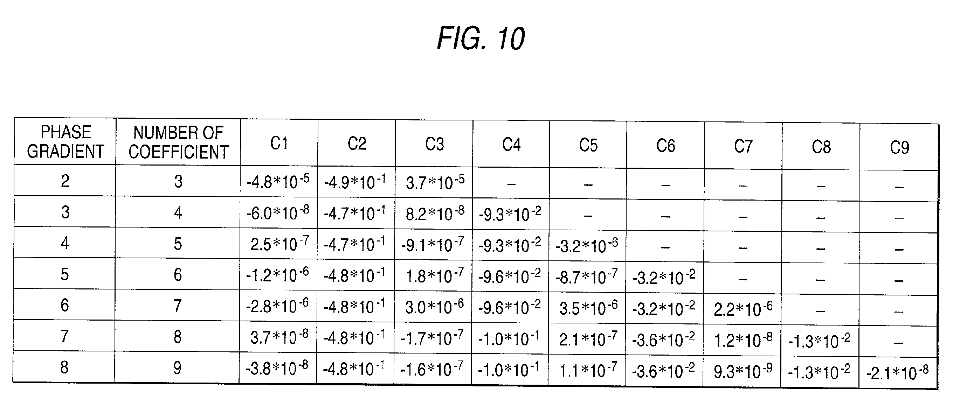

Subsequently, Fig. 10 is a table expressing the relation among the phase gradient, the number of the coefficient, and the coefficient values of the respective coefficients shown in Fig. 9 in a more generalized state.

In Fig. 10, the leftmost column indicates the phase gradient, the next column indicates the number of the coefficient, and the next columns indicate C1, C2, ··· ···, C9, and there are shown the coefficient values of the respect coefficients C1, C2, ··· ···, C9 in combinations of the phase gradient and the number of the coefficient in which the number of the coefficient becomes n + 1 when the phase gradient is n.

As shown in Fig. 10, in the combinations in which the phase gradient is m and the number of the coefficient is m + 1 larger than it by 1, when the phase gradient is 2 to 8, and the number of the coefficient corresponding to it is 3 to 9, the numerical values including the exponents of any coefficient values of the odd-numbered coefficients C1, C3, C5, C7, and C9 are 10⁻⁵, 10⁻⁶, 10⁻⁷, 10⁻⁸, and 10⁻⁹, and the respective coefficient values including these numerical values are substantially 0.

When the phase gradient and the number of the coefficient have such relation, and the coefficient of the multiplier coefficient generation part becomes 0, the multiplier output data of the multiplier for performing multiplication of the coefficient 0 outputted by the multiplier coefficient generation parts becomes 0, and further, the output data of the adder to be inputted to the multiplier also becomes unnecessary. Thus, in the signal processing stages having the multiplier coefficient generation parts in which the coefficient becomes 0, that is, in the odd-numbered signal processing stages 7₁, 7₃, 7₅, 7₇, etc., it is not necessary to provide the adder parts 7₁₃, 7₃₃, 7₅₃, 7₇₃, etc., the multiplier parts 7₁₄, 7₃₄, 7₅₄, 7₇₄, etc., the multiplier coefficient generation parts 7₁₅, 7₃₅, 7₅₅, 7₇₅, etc., and these can be omitted.

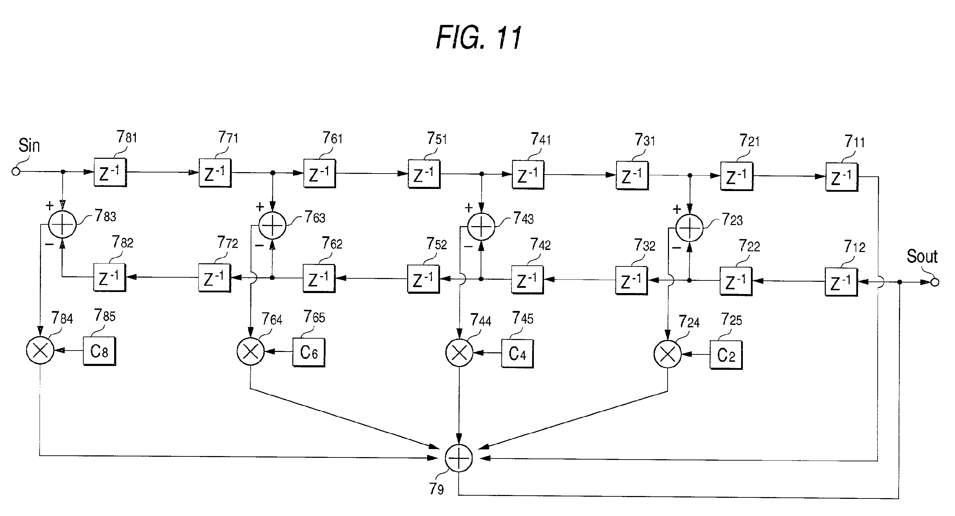

Here, Fig. 11 is a circuit diagram showing a second example of a specific structure of the infinite impulse response digital filter 7 used for the digital quadrature signal detecting circuit shown in Fig. 1 and Fig. 2, and shows the example in which the phase gradient is 7, and the number of the coefficient is 8, and the adder parts 7₁₃, 7₃₃, 7₅₃, and 7₇₃, the multiplier parts 7₁₄, 7₃₄, 7₅₄, and 7₇₄, and the multiplier coefficient generation parts 7₁₅, 7₃₅, 7₅₅, and 7₇₅ in the odd-numbered signal processing stages 7₁, 7₃, 7₅, and 7₇ are omitted.

In Fig. 11, the same structural elements as the structural elements shown in Fig. 3 are designated by the same symbols.

When the infinite impulse response digital filter 7 of the second example shown in Fig. 11 (hereinafter, this is referred to as the second example) is compared with the infinite impulse response digital filter 7 of the first example shown in Fig. 3 (hereinafter, this is referred to as the first example), the second example is such that the adder parts 7₁₃, 7₃₃, 7₅₃, and 7₇₃, the multiplier parts 7₁₄, 7₃₄, 7₅₄, and 7₇₄, and the multiplier coefficient generation parts 7₁₅, 7₃₅, 7₅₅, and 7₇₅ in the odd-numbered signal processing stages 7₁, 7₃, 7₅, and 7₇ (netted stages in Fig. 3) of the first example are omitted, and except for those, there is no structural difference between the second example and the first example. Thus, a further description of the structure of the infinite impulse response digital filter 7 of the second example is omitted.

Besides, the operation in the infinite impulse response digital filter 7 of the second example is almost equal to the operation of the infinite impulse response digital filter 7 of the first example corresponding to that, and the variation state of the phase and the variation state of the group delay in the infinite impulse response digital filter 7 of the second example are also almost equal to the variation state of the phase and the variation state of the group delay in the infinite impulse response digital filter 7 of the first example corresponding to that. Thus, the description of the operation of the infinite impulse response digital filter 7 of the second example is omitted.

When the infinite impulse response digital filter 7 of the second example is compared with the infinite impulse response digital filter 7 of the first example, the adder parts 7₁₃, 7₃₃, 7₅₃, and 7₇₃, the multiplier parts 7₁₄, 7₃₄, 7₅₄, and 7₇₄, and the multiplier coefficient generation parts 7₁₅, 7₃₅, 7₅₅, and 7₇₅ in the odd-numbered signal processing stages 7₁, 7₃, 7₅, 7₇ can be omitted, so that the number of structural parts is further reduced to form a simpler circuit structure, the occupied volume is made smaller by that, and the consumed electric power can be further reduced.

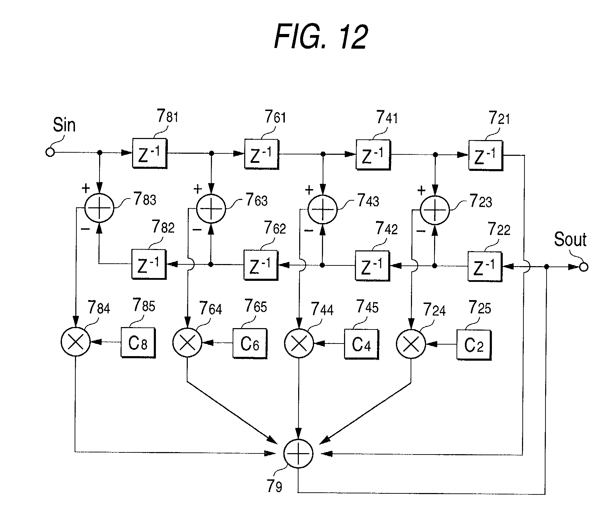

Subsequently, Fig. 12 is a circuit diagram showing a third example of a specific structure of the infinite impulse response digital filter 7 used for the digital quadrature signal detecting circuit 1 shown in Fig. 1 and Fig. 2, and shows a case in which the phase gradient is 7, the number of the coefficient is 8, and the operation frequency of the infinite impulse response digital filter 7 is selected to the frequency fs/2 of a half of the sampling frequency fs of the digital signal to thin out the filter output with order 2.

In Fig. 12, the same structural elements as the structural elements shown in Fig. 3 are designated by the same symbols.

When the infinite impulse response digital filter 7 of the third example shown in Fig. 12 (hereinafter, this is referred to as the third example) is compared with the infinite impulse response digital filter 7 of the second example shown in Fig. 11 (hereinafter, this is referred to as the second example, again), the third example is such that the first delay parts 7₁₁, 7₃₁, 7₅₁, and 7₇₁, and the second delay parts 7₁₂, 7₃₂, 7₅₂, and 7₇₂, together with the adder parts 7₁₃, 7₃₃, 7₅₃, and 7₇₃, the multiplier parts 7₁₄, 7₃₄, 7₅₄, and 7_{74'} and multiplier coefficient generation parts 7₁₅, 7₃₅, 7₅₅, and 7₇₅, in the odd-numbered signal processing stages 7₁, 7₃, 7₅, and 7₇ are omitted, and except for that, there is no structural difference between the third example and the second example. Thus, a further description of the structure of the infinite impulse response digital filter 7 of the third example is omitted.

Besides, the operation of the infinite impulse response digital filter 7 of the third example is almost equal to the operation of the infinite impulse response digital filter 7 of the second example corresponding to that, except that the operation frequency is halved, and the variation state of the phase and the variation state of the group delay in the infinite impulse response digital filter 7 of the third example are also almost equal to the variation state of the phase and the variation state of the group delay of the infinite impulse response digital filter 7 of the second example corresponding to that. Thus, the description of the operation of the infinite impulse response digital filter 7 of the third example is omitted.

When the infinite impulse response digital filter 7 of the third example is compared with the infinite impulse response digital filter 7 of the second example, the adder parts 7₁₃, 7₃₃, 7₅₃, 7₇₃, etc., the multiplier parts 7₁₄, 7₃₄, 7₅₄, 7₇₄, etc., and the multiplier coefficient generation parts 7₁₅, 7₃₅, 7₅₅, 7₇₅, etc. in the odd-numbered signal processing stages 7₁, 7₃, 7₅, 7₇, etc. can be omitted, and further, the first delay parts 7₁₁, 7₃₁, 7₅₁, 7₇₁, etc., and the second delay parts 7₁₂, 7₃₂, 7₅₂, 7₇₂, etc. can also be omitted, so that the number of structural parts is greatly reduced to form a simpler circuit structure, and the occupied volume can be made smaller by that, and the consumed electric power can be greatly reduced. Besides, the occupied volume can be made smaller, and the manufacturing cost can be reduced. Besides, as compared with the first example and the second example, the operation frequency is halved in the third example, so that the ratio of reduction of consumed electric power also becomes high.

As described above, according to the invention, the digital quadrature signal detecting circuit is constituted by the one-system digital signal delay circuit for forming the I signal, and the one-system digital all-pass filter for forming the Q signal, and the infinite impulse response digital filter is used as the digital all-pass filter, so that as compared with the known digital quadrature signal detecting circuits of this type, the number of required circuits is greatly decreased, and further, since the infinite impulse response digital filter, the filter order (number of signal processing stages) of which may be small as compared with the finite impulse response digital filter, is used, there are effects that the digital quadrature signal detecting circuit can be obtained in which the number of structural parts is reduced to form the simple circuit structure, the occupied volume is small, and the consumed electric power can be reduced.

Besides, according to the invention, the effects obtained by the foregoing invention can be expected, and further, since the digital signal to be processed is the digital signal thinned out with order 2, and the operation rates of the digital signal delay circuit and the digital all-pass filter become low, the consumed electric power can be further reduced as compared with the degree of the reduction of the consumed electric power expected in the foregoing invention.

Further, according to the invention, since the infinite impulse response digital filter is such that the phase gradient number is selected to be n - 1 with respect to the stage number n of the cascaded signal processing parts, in addition to the effect obtained by the foregoing invention, there is an effect that the digital quadrature signal detecting circuit having excellent conversion characteristics can be obtained.

Besides, according to the invention, since the signal processing part of the odd-numbered stage from the output side in the cascaded n-stage signal processing parts is constituted by only the first delay part and the second delay part, there is an effect that the digital quadrature signal detecting circuit can be obtained in which the number of structural parts is reduced by the omission of the adder parts, the multiplier parts, and the multiplier coefficient generation parts of the signal processing parts of the odd-numbered stages to form the simple circuit structure, the occupied volume can be made smaller, and the consumed electric power can be further reduced.

Besides, according to the invention, the operation frequency of the infinite impulse response digital filter is selected to 1/2 of the sampling frequency, and the cascaded n stage signal processing parts are constructed by only the signal processing parts of even-numbered stages from the output side, so that all the signal processing parts of the odd-numbered stages from the output side are omitted, and the signal processing parts are constituted by only the signal processing parts of the even-numbered stages from the output side, there is an effect that the digital quadrature signal detecting circuit can be obtained in which the number of structural parts is greatly decreased by the omission of all of the signal processing parts of the odd-numbered stages to form the simpler circuit structure, the occupied volume can be further reduced, and the consumed electric power can be greatly reduced.

## Claims

1. A digital quadrature signal detecting circuit, comprising:
a digital signal delay circuit for forming an in-phase signal by delaying a digital signal outputted from an analog/digital conversion part for analog/digital converting a received signal having a non-zero center frequency by a predetermined sampling frequency; and
a digital all-pass filter for forming a quadrature signal by shifting a phase of the digital signal by 90°,
wherein the digital all-pass filter is an infinite impulse response digital filter having a definite group delay frequency characteristic, and the digital signal delay circuit has a signal delay amount equal to a group delay amount of the digital all-pass filter.

2. A digital quadrature signal detecting circuit, comprising:
a digital signal delay circuit for forming an in-phase signal by delaying one of digital signals obtained by thinning out, with order 2, a digital signal outputted from an analog/digital conversion part for analog/digital converting a received signal having a non-zero center frequency by a predetermined sampling frequency; and
a digital all-pass filter for forming a quadrature signal by shifting, by 90°, a phase of the other of the digital signals thinned out with order 2,
wherein the digital all-pass filter is an infinite impulse response digital filter having a definite group delay frequency characteristic, and the digital signal delay circuit has a signal delay amount equal to a group delay amount of the digital all-pass filter.

3. A digital quadrature signal detecting circuit according to claim 1, wherein the infinite impulse response digital filter includes cascaded signal processing parts of n stages, n being an integer of three or larger, each of the cascaded signal processing parts includes a first delay part, a second delay part, an adder part, a multiplier part, and a multiplier coefficient generation part, and constants of the respective parts are set so that a phase gradient number generated in a signal band with 1/4 of the sampling frequency as a center becomes n-1.

4. A digital quadrature signal detecting circuit according to claim 3, wherein in the cascaded n stage signal processing parts, the signal processing part of an odd-numbered stage from an output side is constituted by only the first delay part and the second delay part.

5. A digital quadrature signal detecting circuit according to claim 3, wherein in a case where an output of the infinite impulse response digital filter is outputted through thinning-out with order 2, an operation frequency of the infinite impulse response digital filter is selected to 1/2 of the sampling frequency, and the cascaded n stage signal processing parts are constructed by only the signal processing parts of even-numbered stages from an output side.

6. A digital quadrature signal detecting circuit according to claim 2, wherein the infinite impulse response digital filter includes cascaded signal processing parts of n stages, n being an integer of three or larger, each of the cascaded signal processing parts includes a first delay part, a second delay part, an adder part, a multiplier part, and a multiplier coefficient generation part, and constants of the respective parts are set so that a phase gradient number generated in a signal band with 1/4 of the sampling frequency as a center becomes n-1.

7. A digital quadrature signal detecting circuit according to claim 6, wherein in the cascaded n stage signal processing parts, the signal processing part of an odd-numbered stage from an output side is constituted by only the first delay part and the second delay part.

8. A digital quadrature signal detecting circuit according to claim 6, wherein in a case where an output of the infinite impulse response digital filter is outputted through thinning-out with order 2, an operation frequency of the infinite impulse response digital filter is selected to 1/2 of the sampling frequency, and the cascaded n stage signal processing parts are constructed by only the signal processing parts of even-numbered stages from an output side.
